Europäisches Patentamt

European Patent Office

Office européen des brevets

(11) Publication number: 0 278 655
A1

# EUROPEAN PATENT APPLICATION

(21) Application number: 88300845.0

(22) Date of filing: 02.02.88

(51) Int. Cl.⁴: **G11B 5/41** , G11B 23/50 , G11B 3/58

(30) Priority: 11.02.87 GB 8703080

(43) Date of publication of application:
17.08.88 Bulletin 88/33

(84) Designated Contracting States:
BE DE FR IT NL

(71) Applicant: PACEVAULT LIMITED
"Stelvio House" Basseleg Road
Newport Gwent NP9 3EB(GB)

(72) Inventor: Cecil, Don Robert
"The White House" Llanfoist
Abergavenny Gwent NP7 9LR(GB)
Inventor: Evans, Richard Paul
69 Wyedean Rise Priory Fields
Belmont Herefordshire(GB)

(74) Representative: Newstead, Michael John et al
Page & Co. Temple Gate House Temple Gate
Bristol BS1 6PL(GB)

(54) Apparatus for use in cleaning a tape head.

(57) There is disclosed apparatus for use in cleaning
a tape head comprising a cartridge (1,17) which
carries rotatable means (26,27,28,29,30) for carrying
tape head cleaning means. In the cartridge there are
drive means for rotating the rotatable means so as to
rotate the tape head cleaning means against a tape
head in use of the apparatus. The drive means
comprise a first gear (20), coupled to the rotatable
means, rotation of the first gear about its axis causing rotation of the rotatable means; a second gear
(23), rotatable about an axis at right angles to the
axis of the first gear and coupled to the first gear so
that rotation of the second gear about its axis causes
rotation of the first gear; and means (24) coupled to
the second gear for use in rotating the latter.

FIG.1

# APPARATUS FOR USE IN CLEANING A TAPE HEAD

## Field and Background of the Invention

The present invention relates to apparatus for use in cleaning a tape head.

Apparatus for use in cleaning a tape head in computer tape read/write equipment is known in the form of a cartridge insertable in place of a tape data cartridge. An improved form of such apparatus is described in British Patent Specification No. 2 188 767.

It is an object of the present invention to provide apparatus for use in cleaning a tape head which can be made in a miniaturised form for use with certain kinds of equipment.

## Summary of the Invention

According to the present invention, there is provided apparatus for use in cleaning a tape head, comprising:

a) a cartridge;

b) rotatable means carried by the cartridge, for carrying tape head cleaning means; and

c) drive means in the cartridge for rotating said rotatable means so as to rotate said tape head cleaning means against a tape head in use of the apparatus, said drive means comprising:

i) a first gear, coupled to said rotatable means, rotation of the first gear about its axis causing rotation of the rotatable means;

ii) a second gear, rotatable about an axis at right angles to the axis of the first gear and coupled to the first gear so that rotation of the second gear about its axis causes rotation of the first gear; and

iii) means coupled to the second gear for use in rotating the latter.

## Brief Description of the Drawings

The present invention will now be described, by way of example, with reference to the accompanying drawings, in which:

Figure 1 is a plan view of the inside of a container part of a cartridge of apparatus for use in cleaning a tape head;

Figure 2 is as plan view of the outside of the container part;

Figure 3 is a section on A-A in Figure 1;

Figure 4 is a section on B-B in Figure 1;

Figure 5 is a view in the direction of arrow M in Figure 2;

Figure 6 is a plan view of the inside of a cover part of the cartridge;

Figure 7 is a plan view of the outside of the cover part;

Figure 8 is a section on A-A in Figure 6;

Figure 9 is a section on B-B in Figure 6;

Figure 10 shows a first bevel gear;

Figure 11 is a view in the direction of arrow N in Figure 10;

Figure 12 shows a second bevel gear and a shaft for rotating it;

Figure 13 is a view in the direction of arrow O in Figure 12;

Figure 14 is a view in the direction of arrow P in Figure 10 or arrow Q in Figure 12;

Figure 15 shows a spindle carried by the cartridge;

Figure 16 is a view in the direction of arrow R in Figure 15;

Figure 17 is a view in the direction of arrow S in Figure 15; and

Figure 18 shows a key usable for causing rotation of the shaft of the second bevel gear.

## Detailed Description of the Drawings

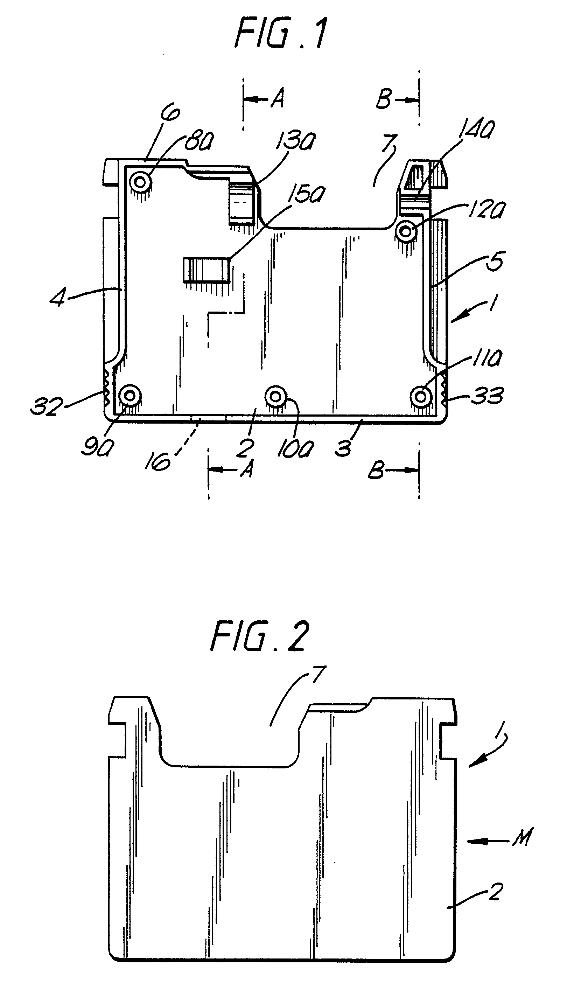

Referring first to Figures 1, 2, 3, 4 and 5, a container part 1 of a cartridge of apparatus for use in cleaning a tape head comprises a base 2, a rear wall 3, opposite side walls 4 and 5, a front wall 6 across part of the front of the container part and an opening 7. Upright hollow pillars 8a, 9a, 10a, 11a and 12a are formed on base 2. On one side of opening 7, there is a bearing member 13a for a first trunnion bearing and on the opposite side a portion 14a having a bearing surface for a second trunnion bearing. Also on the base 2 is a bearing member 15a for a third trunnion bearing. In the rear wall 3 is a circular through-hole 16. The container part 1 is formed as a one-piece plastics moulding of high-impact styrene.

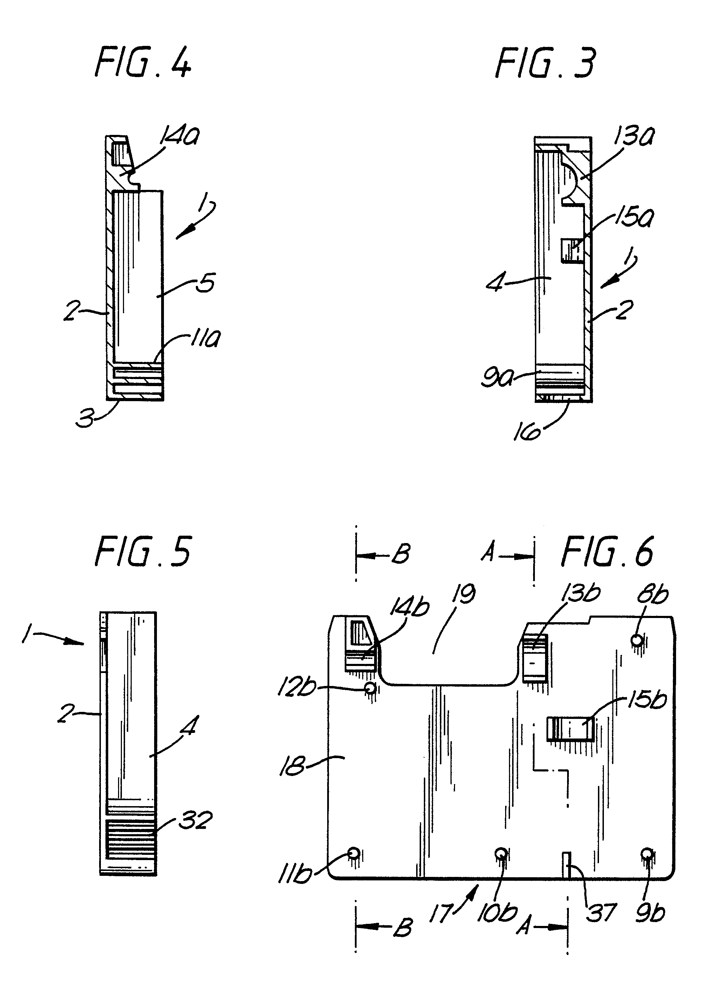

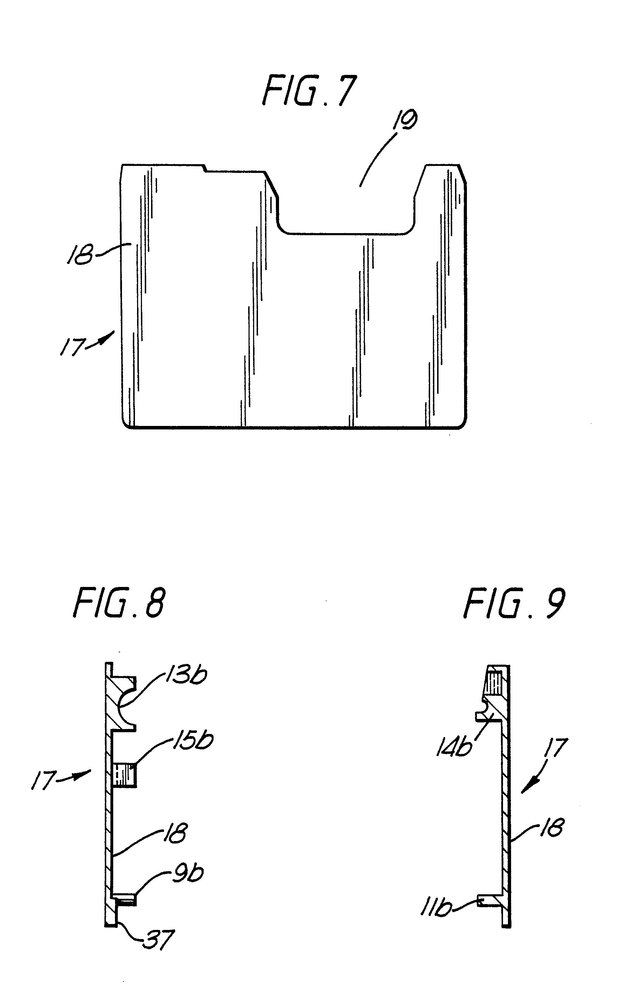

Referring to Figures 6, 7, 8 and 9, a cover part 17 of the cartridge and which is fitted on to container part 1 comprises a cover plate 18 having an opening 19 which overlies opening 7 and upright lugs 8b, 9b, 10b, 11b and 12b which are received in hollow pillars 8a, 9a, 10a, 11a and 12a respectively. Also on the plate 18 is a bearing member 13b overlying the member 13a to form the first trunnion bearing, on the opposite side of opening 19 there being a portion 14b having a bearing surface and overlying the member 14a to form the second trunnion bearing. Corresponding to the member 15a of the container part 1, the cover part 17 has a bearing member 15b on the plate 18, the member 15b overlying the member 15a to form the third trunnion bearing. The cover part 1 is formed as a one-piece plastics moulding of high-impact styrene.

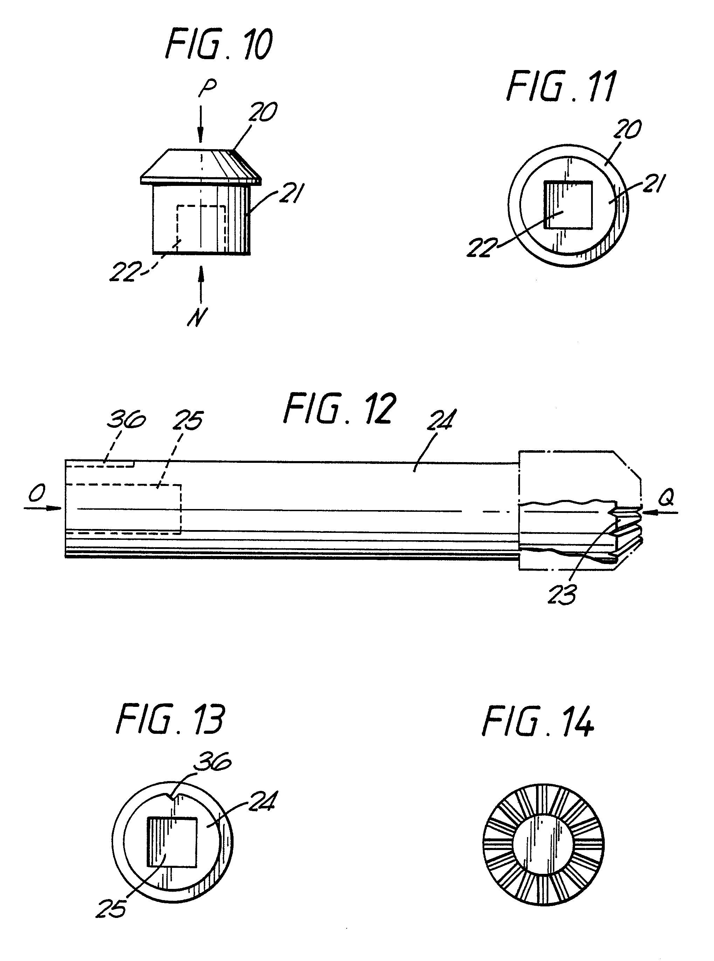

Referring to Figures 10 and 11, a first bevel gear 20 is integral with a stub 21 which is received in the first trunnion bearing provided by members 13a and 13b, with the first bevel gear 20 inside the cartridge, there being a square section opening 22 in the stub 21 facing into the space provided by openings 7 and 19.

Referring to Figures 12 and 13, a second bevel gear 23 is integral with a shaft 24, the latter being held in the third trunnion bearing provided by members 15a and 15b for rotation about the common axis of shaft 24 and bevel gear 23, this being at right angles to the axis of rotation of first bevel gear 20. Bevel gears 20 and 23 (which in the present example are toothed bevel gears) are in engagement with one another whereby rotation of shaft 24 about its axis causes rotation of bevel gear 20 about the latter's axis and hence rotation of stub 21. The shaft 24 has a square-section opening 25 in the end remote from bevel gear 23, the opening 25 facing outwards through opening 16.

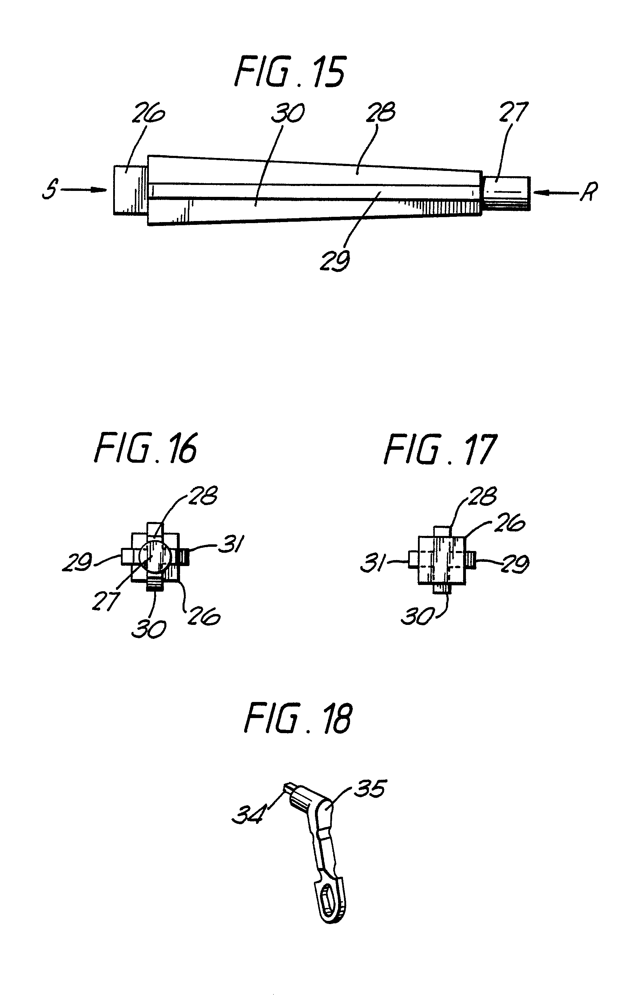

Referring to Figures 15, 16 and 17 there will now be described a spindle carried by the cartridge which spindle, in use, carries a foam sponge cleaning roller for cleaning a tape head. The spindle is a one-piece plastics moulding and comprises a square-section stub 26, a circular-section stub 27 and, joining stubs 26 and 27, four webs 28, 29, 30 and 31 mutually offset by 90 and tapering towards stub 27.

In use of the apparatus, a cylindrical foam sponge cleaning roller having a longitudinal through-hole is slid on to the spindle to be carried between stubs 26 and 27 by the webs 28, 29, 30 and 31. Freon is sprayed on to the cleaning roller and the spindle, carrying the roller, is offered up to the space provided by openings 7 and 19 and the stub 27 is slipped into the trunnion bearing provided by portions 14a and 14b as far as possible, whereupon the stub 26 may be slipped into the square-section hole 22 in stub 21, the result being that the spindle is held for rotation by stub 21 and the trunnion bearing provided by portions 14a and 14b. To clean the read/write head in a computer tape read/write equipment, the cartridge is slid into the drive aperture of the equipment so that the cleaning roller is over the normal tape path and pressed up against the read/write head of the drive. To use the drive aperture and loading guides, the cartridge has similar outer dimensions as a tape data cartridge normally used with the equipment. For example, for equipment which uses a 3M's DC 200 Mini data cartridge, the overall outer dimensions would be about 8cm by about 6cm by about 1.3cm. The cover part 1 of the cartridge has knurled portions 32 and 33 to assist it to be gripped by the hand during insertion into a drive aperture.

With the cartridge inserted into a drive aperture, a square-section projection 34 of a key 35 of moulded plastics material is inserted into the square-section opening 25 through opening 16, rotation of the key causing rotation of shaft 24 and thereby rotation of bevel gear 23, bevel gear 20, stub 21 and the spindle. Rotation of the spindle rotates the foam sponge roller against the read/write head to clean the latter. To provide an audible indication of rotation of shaft 24, the latter is formed with a shallow longitudinal notch 36 and the cover plate 1 8 is formed with a corresponding projection 37, the latter clicking against the notch 36 once per revolution.

After at least one rotation of the foam sponge roller against the read/write head, the cartridge is removed from the drive aperture and the foam sponge roller is discarded, being replaced by a fresh one at the next cleaning operation.

## Claims

1. Apparatus for use in cleaning a tape head, comprising:
   a) a cartridge;
   b) rotatable means carried by the cartridge, for carrying tape head cleaning. means; and
   c) drive means in the cartridge for rotating said rotatable means so as to rotate said tape head cleaning means against a tape head in use of the apparatus, said drive means comprising: i) a first gear, coupled to said rotatable means, rotation of the first gear about its axis causing rotation of the rotatable means;
   ii) a second gear, rotatable about an axis at right angles to the axis of the first gear and coupled to the first gear so that rotation of the second gear about its axis causes rotation of the first gear; and
   iii) means coupled to the second gear for use in rotating the latter.

2. Apparatus according to Claim 1, wherein said rotatable means carried by the cartridge comprises a spindle for carrying tape head cleaning means in the form of a cleaning roller, one end of the spindle being received in a bearing carried by the cartridge and the other end being coupled to said first gear.

3. Apparatus according to Claim 2, wherein said first gear has a projection received in a further bearing carried by the cartridge, said other end of said spindle being coupled with said projection so as to be coupled to said first gear.

4. Apparatus according to any preceding Claim, wherein said means coupled to the second gear comprises a shaft carrying the second gear and co-axial therewith.

5. Apparatus according to Claim 4, wherein said shaft is received by a further bearing carried by the cartridge.

6. Apparatus according to Claim 4 or 5, wherein said shaft is accessible externally of the cartridge to be rotated about its longitudinal axis.

7. Apparatus according to Claim 6, wherein the end of said shaft remote from the second gear is accessible via an opening in a wall of the cartridge.

8. Apparatus according to Claim 7, wherein said shaft is formed with means for receiving a device for rotating the shaft inserted via said opening.

9. Apparatus according to any preceding Claim, wherein said first and second gears are bevel gears.

10. Apparatus according to any preceding Claim, wherein said cartridge comprises a container part having a base and walls of the cartridge and a cover part fitted on to the container part, the cartridge having a space defined by openings in the base and cover part, across which space said rotatable means extends.

0 278 655

FIG.1

FIG.2

0 278 655

FIG.4

14a
1
5
2
11a
3

FIG.3

13a
15a
4
1
2
9a
16

FIG.5

1
2
4
32

FIG.6

B
A
14b
19
13b
8b
12b
15b
18
11b
17
10b
37
9b
B
A

*FIG.7*

*FIG.8*

*FIG.9*

0 278 655

FIG.10

FIG.11

FIG.12

FIG.13

FIG.14

FIG. 15

FIG. 16

FIG. 17

FIG. 18

| | DOCUMENTS CONSIDERED TO BE RELEVANT | | EP 88300845.0 |
|---|---|---|---|

| Category | Citation of document with indication, where appropriate, of relevant passages | Relevant to claim | CLASSIFICATION OF THE APPLICATION (Int. Cl 4) |
|---|---|---|---|
| X,P | SOVIET INVENTIONS ILLUSTRATED, section E1, week 8712, May 6, 1987 DERWENT PUBLICATIONS LTD., London, T03 <br> * SU 1247-939 (GORSKII) * <br> -- | 1,2 | G 11 B 5/41 <br> G 11 B 23/50 <br> G 11 B 3/58 |
| Y | US - A - 4 458 281 (KARA) <br> * Fig. 4,5; abstract * <br> -- | 1,2 | |
| Y,P, D | GB - A - 2 188 767 (PACEVAULT LIMITED) <br> * Fig. 1; abstract * <br> -- | 1,2 | |
| A | US - A - 4 631 616 (ZAGO et al.) <br> * Fig. 1,3; claims 1-4 * <br> ---- | 1,2 | |
| | | | TECHNICAL FIELDS SEARCHED (Int. Cl.4) |
| | | | G 11 B 5/00 <br> G 11 B 3/00 <br> G 11 B 23/00 |

| The present search report has been drawn up for all claims | | |
|---|---|---|
| Place of search <br> VIENNA | Date of completion of the search <br> 16-05-1988 | Examiner <br> BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82